# EUROPEAN PATENT APPLICATION

(11) **EP 4 261 145 A1**
(43) Date of publication of application: **18.10.2023**
(21) Application number: 23167809.5
(22) Date of filing: 13.04.2023
(51) Int. Cl.: B65D 35/28, B01F 33/501

(54) **STIRRER FOR CURABLE COMPOSITIONS AND KIT THEREWITH**

(30) Priority: 15.04.2022 US 202263363057 P
(71) Applicant: Sanford L.P., Atlanta GA 30328 (US)
(72) Inventor: CHUDZIK, Stan, Alpharetta, Georgia, 30004 (US); PHUN, Lien, Cumming, Georgia, 30041 (US); TEBBE, Jessica, Alpharetta, Georgia, 30022 (US); JOURDEN, Michael, Smyrna, Georgia, 300082 (US); PRATER, Roni, Cumming, Georgia, 30028 (US); HINCHEY, Morgan, Atlanta, Georgia, 30310 (US)
(74) Representative: Page White Farrer

(57) **Abstract**

A stirrer for stirring a curable composition extracted from a squeezable container may include a body extending along a stirrer axis. A slot may be defined in the body along the stirrer axis. The slot may be configured to retain or squeeze at least a portion of the squeezable container. A total length of the slot may be less than 80% of a total length of the body. The stirrer may further include a tab extending from the body, which may have a substantially polygonal contour. The slot may extend to a teardrop-shaped end facing the tab. The slot may extend along a zigzag line. The tab may be held during engagement of the squeezable container with the slot to extract the curable composition and during stirring. The body may defining a tubular section defining the slot. The stirrer may further include a scoop extending from the tubular section.

## Description

### CROSS-REFERENCE TO RELATED APPLICATION

This application claims the benefit of U.S. Provisional Application No. 63/363,057, filed April 15, 2022, the entirety of which is hereby incorporated by reference.

### TECHNICAL FIELD

The present disclosure relates generally to stirrers, and in particular, to stirrers for curable compositions.

### BACKGROUND

Curable compositions may be used to form various articles. For example, such compositions may be cured in a mold to provide a predetermined shape and form. Some curable compositions may be formed by combining two or more distinct precursor compositions (for example, by combining "part A" and "part B" compositions). Curing may be initiated by mixing the precursors, for example, resulting in curing by chemical reaction. Additives may also be incorporated in a curable composition, for example, by mixing.

Thus, a need remains for stirrers for stirring curable compositions.

### SUMMARY

The present disclosure describes stirrers for curable compositions that may also be used to facilitate extracting the curable compositions from squeezable containers.

In embodiments, the present disclosure describes a stirrer for stirring a curable composition extracted from a squeezable container. The stirrer includes a body extending in a direction along a stirrer axis. The stirrer further includes a slot defined in the body and extending in the direction along the stirrer axis. The slot is configured to retain or squeeze at least a portion of the squeezable container. A total length of the slot may be less than 80% of a total length of the body.

In embodiments, the present disclosure describes a stirrer for stirring a curable composition extracted from a squeezable container. The stirrer includes a body extending in a direction along a stirrer axis. The stirrer may further include a slot defined in the body and extending in the direction along the stirrer axis. The slot may be configured to retain or squeeze at least a portion of the squeezable container. The stirrer may further include a tab extending from the body. The tab may have a substantially polygonal contour. The slot may extend to a teardrop-shaped end facing the tab. The tab is configured to be held during engagement of the squeezable container with the slot to extract the curable composition and during stirring of the curable composition.

In embodiments, the present disclosure describes a stirrer for stirring a curable composition extracted from a squeezable container. The stirrer includes a body extending in a direction along a stirrer axis and defining a tubular section. The stirrer may further include a slot defined in the tubular section of the body and extending in the direction along the stirrer axis. The slot may be configured to retain at least a portion of the squeezable container. The stirrer may further include a scoop extending from the tubular section. The stirrer may further include a tab extending from the body and opposing the scoop. The tab may have a substantially polygonal contour. The slot may extend along a zigzag line. The tab may be configured to be held during engagement of the squeezable container with the slot to extract the curable composition and during stirring of the curable composition.

In embodiments, the present disclosure describes a kit including at least one squeezable container including a curable composition. The kit further includes a stirrer for stirring the curable composition extracted from the squeezable container. The stirrer includes a body extending in a direction along a stirrer axis. A slot defined in the body may extend in the direction along the stirrer axis. The slot may be configured to retain or squeeze at least a portion of the squeezable container.

### BRIEF DESCRIPTION OF THE DRAWINGS

FIG. 1A is a conceptual perspective view of a stirrer including a body defining a slot.
FIG. 1B is a conceptual partial magnified view of an end portion of the stirrer of FIG. 1A.
FIG. 1C is a conceptual top view of the stirrer of FIG. 1A.
FIG. 2 is a conceptual side view of a squeezable container being squeezed by passing through the slot of the stirrer of FIG. 1A.
FIG. 3 is a conceptual side view of a squeezable container being squeezed with an end being held in the slot, and by being turned about a body of the stirrer of FIG. 1A.
FIG. 4 is a conceptual front view of a stirrer including a body defining a slot having a teardrop-shaped end.
FIG. 5A is a conceptual partial perspective view of a portion of a squeezable container being initially introduced through the teardrop-shaped end of the slot of the stirrer of FIG. 4.
FIG. 5B is a conceptual partial perspective view of another portion of the squeezable container of FIG. 5A being initially introduced through the teardrop-shaped end of the slot of the stirrer of FIG. 4.
FIG. 5C is a conceptual partial perspective of an entire end of the squeezable container of FIG. 5A passing through the slot of the stirrer of FIG. 4.
FIG. 6 is a front view of a stirrer including a body defining a slot and a rounded tab.
FIG. 7 is a front view of a stirrer including a body defining a slot and an angled tab.
FIG. 8 is a conceptual view of pouring of a curable composition being guided by a body of the stirrer of FIG. 7 into a mold, and being held by the user at the angled tab.
FIG. 9A is a first perspective view of a stirrer including a body defining a tab and a tubular section, the tubular section defining a zigzag slot.
FIG. 9B is a partial front view of the zigzag slot of FIG. 9A.
FIG. 9C is a second perspective view of the stirrer of FIG. 9A.

The detailed description is set forth with reference to the accompanying drawings. The drawings are provided for purposes of illustration only and merely depict example embodiments of the disclosure. The drawings are provided to facilitate understanding of the disclosure and shall not be deemed to limit the breadth, scope, or applicability of the disclosure. The use of the same reference numerals indicates similar, but not necessarily the same or identical components. Different reference numerals may be used to identify similar components. Various embodiments may utilize elements or components other than those illustrated in the drawings, and some elements and/or components may not be present in various embodiments. The use of singular terminology to describe a component or element may, depending on the context, encompass a plural number of such components or elements and vice versa.

### DETAILED DESCRIPTION

The present disclosure describes stirrers for curable compositions that may also be used to facilitate extracting the curable compositions from squeezable containers. For example, two-part or multi-part curable compositions, such as silicone compositions, may be extracted from one or more containers or compartments thereof. In embodiments, silicone "Part A" and "Part B" resins may be stored in sealed pouches, and combined shortly before use to initiate curing. After combining, the mixed composition may be shaped or formed, for example, in a mold, while curing commences and completes, to ultimately produce a cured (polymerized) article.

Stirrers according to the present disclosure may be used to stir the compositions to facilitate adequate and uniform mixing. The stirrers also be used to remove as much as possible of the respective silicone Part A and Part B resins from their respective sealed pouches in order to properly mix the silicone casting resins. Additives (color dyes/pigments, glitter, glow-in-the-dark, etc.) may also be potentially mixed in. The amounts of each component may be within a specified tolerance range of each ingredient that allows for proper curing of the mixed components. Though silicone-based curable compositions may be extracted and mixed, stirrers according to the present disclosure may be utilized for other Part A and Part B material mixture recipes such as for urethanes, epoxies, plasters, clays, etc., or even for single-part compositions mixed with additives. For example, instead of initiating curing by mixing, curing of a single-part composition may be initiated by some other stimulus, for example, exposure to a curing wavelength of light, such as an ultraviolet wavelength.

Some manufacturers may identify a tolerance range for each component when measuring out each components volume or weight prior to mixing components together to achieve curing reaction between silicone and catalyst. For example, a manufacturer or supplier may provide one or more plastic measuring cups used to weigh out each ingredient (Part A and Part B) to instructed weights detailed in User Instructions. They may also provide mixing stirring stick(s) such as a wooden popsicle stick to stir mixed ingredients together within a supplied mixing cup/container. However, the resins may tend to be sticky, tacky, viscous, or otherwise difficult to control, and this may lead to difficulties in weighing or measuring amounts with sufficient accuracy. For example, a lower portion or amount, or an improper ratio of the Part A or Part B compositions, may result in incomplete curing or a failure of curing.

In embodiments, the present disclosure describes a stirrer for stirring a curable composition extracted from a squeezable container. The stirrer includes a body extending in a direction along a stirrer axis. The stirrer further includes a slot defined in the body and extending in the direction along the stirrer axis. The slot is configured to retain or squeeze at least a portion of the squeezable container. A total length of the slot may be less than 80% of a total length of the body.

In embodiments, the present disclosure describes a stirrer for stirring a curable composition extracted from a squeezable container. The stirrer includes a body extending in a direction along a stirrer axis. The stirrer may further include a slot defined in the body and extending in the direction along the stirrer axis. The slot may be configured to retain or squeeze at least a portion of the squeezable container. The stirrer may further include a tab extending from the body. The tab may have a substantially polygonal contour. The slot may extend to a teardrop-shaped end facing the tab. The tab is configured to be held during engagement of the squeezable container with the slot to extract the curable composition and during stirring of the curable composition.

In embodiments, the present disclosure describes a stirrer for stirring a curable composition extracted from a squeezable container. The stirrer includes a body extending in a direction along a stirrer axis and defining a tubular section. The stirrer may further include a slot defined in the tubular section of the body and extending in the direction along the stirrer axis. The slot may be configured to retain at least a portion of the squeezable container. The stirrer may further include a scoop extending from the tubular section. The stirrer may further include a tab extending from the body and opposing the scoop. The tab may have a substantially polygonal contour. The slot may extend along a zigzag line. The tab may be configured to be held during engagement of the squeezable container with the slot to extract the curable composition and during stirring of the curable composition.

In embodiments, the present disclosure describes a kit including at least one squeezable container including a curable composition. The kit further includes a stirrer for stirring the curable composition extracted from the squeezable container. The stirrer includes a body extending in a direction along a stirrer axis. A slot defined in the body may extend in the direction along the stirrer axis. The slot may be configured to retain or squeeze at least a portion of the squeezable container.

The slot may provide a squeezing feature to enable the removal of substantially all resin or contents within a storage pouch enabling the user to easily remove ingredients from storage pouches into a mixing container. The same stirrer with the slot used to squeeze the container or pouch can then be used to mix the ingredients together within the mixing container to ensure that ingredients are well mixed together enabling a chemical reaction to occur between ingredients. The curing of the ingredients in the communicated amounts may provide the desired performance of finalized cured material. Further, the stirrer may also provide a tool to enable the user to remove as much casting resin material from the mixing container into the casting mold, for example, by effectively allowing the user to scrap the mixing container side walls of resin and direct it toward the casting mold when pouring.

The stirrer may be formed of any suitable rigid or semi-rigid material, or even a soft material with a rigid or semi-rigid portion, for example, one or more of a plastic, a metal, an alloy, or a wood. In embodiments, the stirrer may include a plastic material that can be manufactured in a variety of manufacturing processes such as injection molding, overmolding, or die cut stamping of sheet plastic. The plastic material may be selected based on performance criteria for how flexible or viscous the resin is in order to provide a sturdy, stiff mixing utensil that will sufficiently mix the ingredients together in a homogeneous mixture enabling for the chemical curing reaction to occur. For example, polypropylene, acrylonitrile butadiene styrene (ABS), polystyrene, high impact polystyrene (HIPS), styrene-acrylonitrile (SAN), acrylonitrile styrene (AS), polycarbonate, a high-durometer thermoplastic elastomer (TPE), or the like, or combinations thereof.

In embodiments, the durometer (softness) of the plastic, for example, TPE could be selected to allow for a soft squeegee-like end similar to a kitchen spatula to aid in the mixing and dispensing process. The squeegee feature could effectively contour to the mixing containers shape to easily scrape away mixed and unmixed resin from the mixing containers side walls. The whole stirrer can be made of TPE or some other relatively soft material, or just a portion or edge of the stirrer that would come into contact with the side walls of the mixing container. This could provide similar functionality as with using a flexible kitchen spatula. The slot may also be defined by a portion of the stirrer that incorporates a relatively soft or low durometer material, such as TPE, to squeeze out the contents of the pouch.

The slot within the stirrer may enable the user to slide the casting resin pouch into a slot and the resin contents from the pouch can be squeezed out of the pouch by either slowly guiding the mixing stirrer tool down the length of the pouch or by slightly angling the mixing stirrer tool, so that the slot opening essentially decreases in width size as the user slowly glides the angled mixing stirrer tool down the length of the pouch.

Alternatively, the user may insert the pouch into the slot of the mixing stirrer tool, but then turn the mixing stirrer tool so that the pouch starts wrapping around the mixing stirrer tool, to effectively roll the pouch up and squeeze out the resin from the pouch efficiently.

The slot may include a teardrop-shaped end or opening to enable easier insertion of the resin pouch into the squeeze slot. The teardrop-shape may be fully enclosed, or may be open at one end (open teardrop slot), or instead of a teardrop, the slot may extend to a triangular opening. Such shaping of one or both ends of the slot may allow for side entry of the pouch.

The slot may use geometrical features to better grip the pouch material. For example, the slot may have a jagged edged to grip into the pouch material to securely hold the pouch material if the mixing stirrer utensil is used to roll-up the pouch for dispensing its contents.

The stirrer can be of a variety of sizes that optimizes the articulation of the stirrer when used either as a dispensing tool or a mixing tool. As non-limiting examples, dimensions of a body of the stirrer may range from 9.5mm wide by 114mm long by 1-3 mm thick (depending on the material used, for example, metal, plastic, or wood, to provide sufficient resistance to flexing or bending). In embodiments, the stirrer may have a thickness of about 3mm. The stirrer may have any suitable length, for example, being sufficiently long to extend beyond the height of a mixing container in which the curable composition may be mixed. Such a length may prevent dropping or losing the stirrer in the contents of the mixing container, and may facilitate holding one end of the stirrer while another end of the stirrer is placed within an interior or along a bottom of the mixing container. Alternative dimensions could be in the range of 12mm wide by 120mm long by 3mm thick for when using plastic resins like acrylic, polypropylene, polystyrene, HIPS, ABS, AS, SAN, or polycarbonate. The slot dimension can also be in a variety of widths and lengths depending on the pouch material thickness with resin. For example, slot widths of 0.6mm, 0.75mm, 1.0mm, 1.5mm, and 3mm may be used to facilitate squeezing out resin from the pouch.

Stirrers according to the present disclosure may enable a user to easily dispense out a high percentage of the resin from the storage pouch. The stirrer may offer different methods of squeezing the pouch contents out, for example, sliding the slot straight down a pouch, sliding the slot at an angle to the pouch, and twisting the stirrer around end of pouch. The stirrer may enable the user to easily stir the ingredients in a container to mix into a homogenous mixture and initiate the chemical reaction starting the curing process of the resin components. The stirrer may also aid in scraping out the mixed resin from the container, and to direct casting resin being poured from the mixing cup into the casting mold by acting as a liquid guiding "rutter," enabling the user to accurately aim the resin stream into the opening of the casting mold.

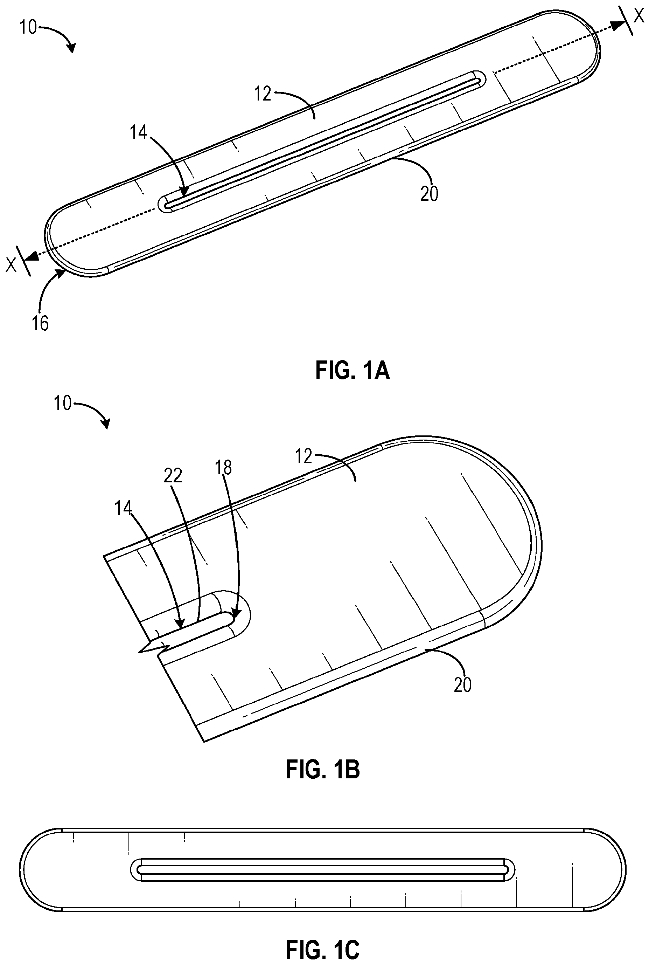

FIG. 1A is a conceptual perspective view of a stirrer 10 including a body 12 defining a slot 14. FIG. 1B is a conceptual partial magnified view of an end portion of the stirrer 10 of FIG. 1A. FIG. 1C is a conceptual top view of the stirrer 10 of FIG. 1A. The stirrer 10 may be useful for stirring a curable composition extracted from a squeezable container (not shown in FIGS. 1A to 1C). The squeezable container may be in the form of a pouch, or any shape that can be pushed or passed along an edge, or through a slot.

The stirrer 10 includes the body 12 extending in a direction along a stirrer axis X-X. The stirrer 10 further includes the slot 14 defined in the body 10 and extending in the direction along the stirrer axis X-X. The slot 14 is configured to retain or squeeze at least a portion of the squeezable container. A total length of the slot 14 may be less than 80% of a total length of the body. In some embodiments, the total length of the slot is less than 60% of the total length of the body. In some embodiments, the total length of the slot is less than 50% of the total length of the body. Providing slot 14 with a length that is shorter than that of the body 12 may facilitate gripping or holding of the stirrer 10, for example, at a portion of the body 12 where slot 14 does not extend.

An entirety, or a portion, of the body 12 may be rigid. In some embodiments, at least a portion of the body 12 surrounding the slot 14 is substantially rigid. In some embodiments, the entire body 12 is substantially rigid. The term "rigid" may be understood to mean sufficiently rigid such that the body 12 or the slot 14 substantially retains its form or shape during stirring, or during engagement of the stirrer with the container. Some deformation, for example, to facilitate squeezing or extracting the contents of the container, or to scrape the walls of the container in which contents are stirred or mixed, may be exhibited by the body 12.

The body may be formed of any suitable material. In some embodiments, the body is at least partially formed of a plastic, a metal, an alloy, a wood, or combinations thereof. The plastic may include polypropylene, acrylonitrile butadiene styrene (ABS), polystyrene, high impact polystyrene (HIPS), styrene-acrylonitrile (SAN), acrylonitrile styrene (AS), polycarbonate, a high-durometer thermoplastic elastomer (TPE), or the like, or combinations thereof.

The body 12 may be formed in one piece, or in multiple pieces permanently or temporarily coupled or secured together. In some embodiments, the body 12 is formed as a unitary continuous unit.

The slot 14 may extend along a line, or along a curve, or along any predetermined contour suitable for passing along or pressing a side of a container to promote extraction, squeezing out, or removal of contents of the container, or to promote retention of a portion or end of the container within or against the stirrer 10 as the container is wrapper around the entire stirrer 10 itself.

The slot 14 may have any suitable geometry and dimensions for engaging the container. For example, the slot 14 may define a maximum slot width, the body 12 may defines a maximum body thickness, and the maximum slot width may be in a ratio of 5: 1 to 1:5 relative to the maximum body thickness. In some embodiments, the body 12 defines a maximum body width, and the maximum slot width is less than 20% of the maximum body width. In some such embodiments, the maximum slot width is less than 10% of the maximum body width. In some such embodiments, the maximum slot width is less than 5% of the maximum body width.

Providing a slot width in a certain ratio relative to the body diameter and/or the body width may promote retaining the form or rigidity of the stirrer 10, and may resist undesirable deformations that may be introduced by an unduly wide slot, but while facilitating an effective squeezing action or engagement with the container.

The body 12 may be provided with features to promote ergonomic use. For example, the body 12 may terminate at a rounded body end 16. In some embodiments, the body end 16 may be a first rounded body end, and the body 12 may extend between the first rounded body end 16 and a second rounded body end opposing body end 16. An outer edge of the body 12 may be provided a rounded contour. For example, the body 12 may defines a rounded body edge 18 across a thickness of the body. The rounded body end 18 may also facilitate scraping or mixing a composition in a mixing container, relative to a square body end, for example, along a corner, an edge, or a bottom of the mixing container.

The slot 14 may be provided features to facilitate introduction or engagement of a portion of a container with the slot 14, to avoid or reduce unintended catching or holding of a portion of the container, and/or to facilitate removal or disengagement of the container from the stirrer 10. For example, the slot 14 may terminate at a rounded slot end 20. In some embodiments, the slot end 20 may be a first rounded body end, and the slot 14 may extend between the first rounded slot end 20 and a second rounded slot end opposing slot end 20. In some embodiments, the slot 14 has a rounded slot edge 22 across a thickness of the body. Providing the rounded slot edge 22 may facilitate a smoother passage of a portion of a container past the slot 14, for example, to promote squeezing or extracting the contents of the container.

The slot 14 may be symmetrically disposed in the stirrer 10, or may be asymmetric. For example, a center of the slot 14 may be aligned with a center of the body 14. In other embodiments, the center of the slot is offset from the center of the body, for example, in directions along and/or transverse to the axis X-X.

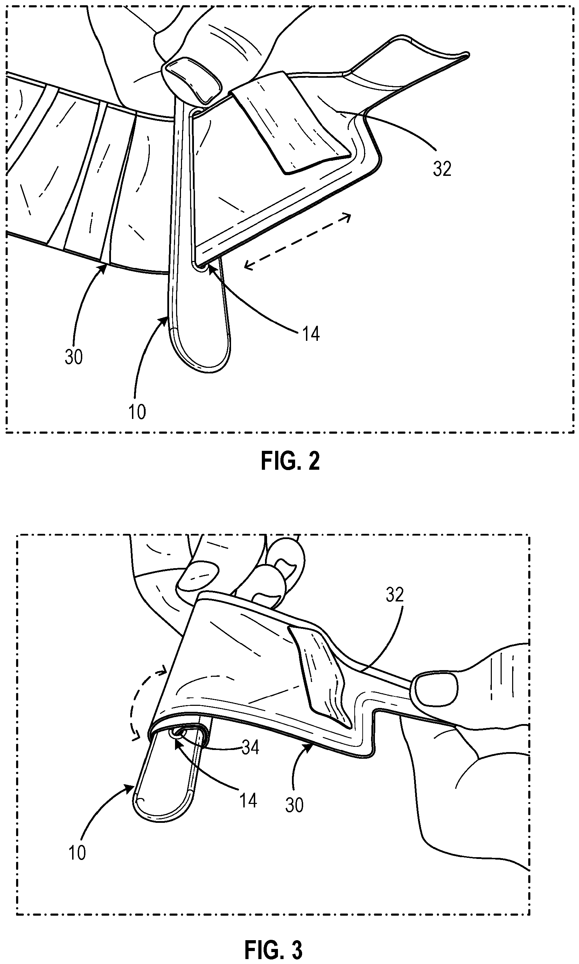

Some examples of a use of the stirrer 10 are described with reference to FIGS. 2 and 3. However, stirrer 10 may be used in any other manner consistent with the present disclosure.

FIG. 2 is a conceptual side view of a squeezable container 30 being squeezed by passing through the slot 14 of the stirrer 10 of FIG. 1A. The container 30 may be formed of any squeezable or deformable material, for example, a metal, an alloy, a plastic, such as a foil, film, membrane, or laminates thereof. The container 30 may be in the form of a pouch.

As seen in FIG. 2, the container 30 may be slid along the slot 14, or the stirrer 10 may be slid along the container 30. Ultimately, the contents of the container 30 may be urged toward an opening 32 of the container 30, so that the container 30 is substantially emptied. A portion of the container 30 may be folded against a side of the stirrer 10 to facilitate removal of the contents. After a major portion or substantially all of the contents of the container 30 are removed, the stirrer 10 may be disengaged from the container 30. The contents of the container 30 may be removed onto a mixing surface, or into a mixing container. The stirrer 10 may subsequently be used to mix the contents of the container 30, for example, with an additive, or with the contents of another container. For example, the container 30 may include a Part A of a two-part curable composition, and the contents thereof may be mixed using the stirrer 10 with a Part B of the curable composition. The Part B also be have been housed in another container similar to container 30, and may have been removed from that container using the same stirrer 10, or a different stirrer.

Instead of, or in addition to, squeezing contents by sliding, the stirrer 10 may also be used to roll the container 30 to facilitate extraction of the contents of the container 30.

FIG. 3 is a conceptual side view of the squeezable container 30 being squeezed with an end 34 of the container 30 being held in the slot 14, and by being turned about the body 12 of the stirrer 10 of FIG. 1A. As portions of the container 30 are rolled or turned about the body 12, the contents are sequentially urged with each rotation or turn toward the opening 32 of the container 30.

The methods of extraction of FIGS. 2 and 3 may be used alone or in combination, for example, a rolling followed by a squeezing, or vice versa.

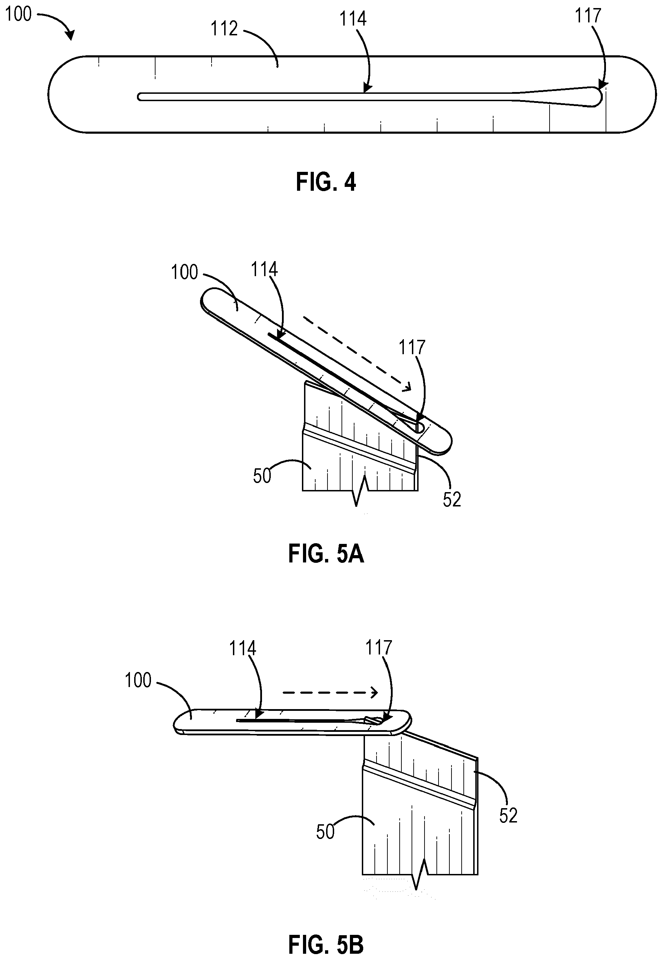

The slot may include a geometrical feature to ease or facilitate retention, introduction, or engagement of a stirrer with a container, as described with reference to FIGS. 4 to 5C.

FIG. 4 is a conceptual front view of a stirrer 100 including a body 112 defining a slot 114 having a teardrop-shaped end 117. The stirrer 100, the body 112, and the slot 114 are substantially the same as or similar in form, construction, use, and composition, to the stirrer 10, the body 12, and the slot 14 described with reference to FIGS. 1A to 3, differing in the presence of the teardrop-shaped end 117 of the slot 114. The slot 114 terminates at the teardrop-shaped slot end 117, and the teardrop-shaped slot end 117 may facilitate introduction of a portion of a squeezable container (for example, the container 30, or another container) into or through the slot.

While a single teardrop-shaped end is shown in FIG. 4, the slot 114 may be provided with two such ends. For example, the slot 114 may extend between a first teardrop-shaped slot end and a second teardrop shaped slot end.

FIG. 5A is a conceptual partial perspective view of a portion 52 of a squeezable container 50 being initially introduced through the teardrop-shaped end 117 of the slot of the stirrer 100 of FIG. 4. As shown in FIG. 5A, the stirrer 100 may be angled and moved downward, with the teardrop-shaped end 117 positioned at an end or a corner of the container 50, such that the portion 52 eventually enters the slot 114.

FIG. 5B is a conceptual partial perspective view of another portion of the squeezable container 50 of FIG. 5A being initially introduced through the teardrop-shaped end 117 of the slot 114 of the stirrer 100 of FIG. 4. In the alternative process of FIG. 5B, another end or corner of the container 50 may be engaged with a corner or a point of the container 50, and the stirrer 100 may be slid along the portion 52 to ultimately introduce at least the portion 52 of the container 50 through the slot 114.

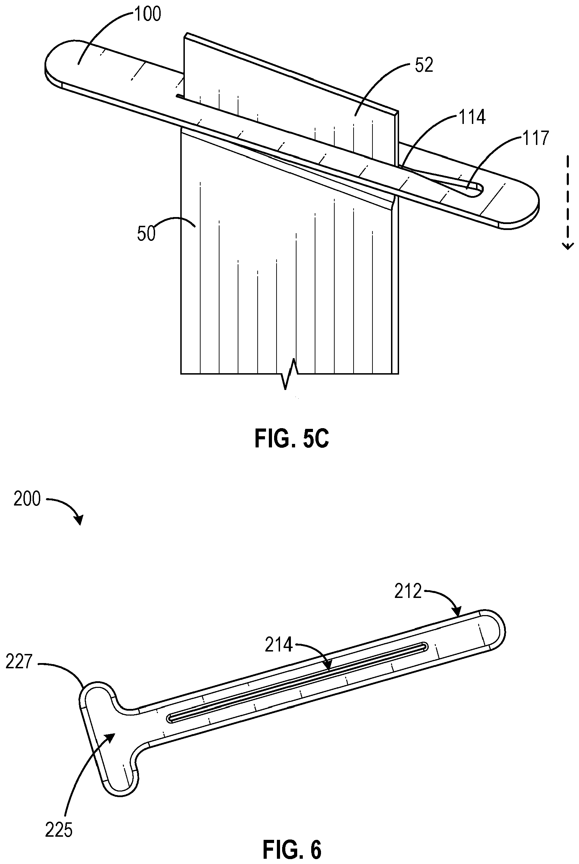

FIG. 5C is a conceptual partial perspective of the entire end 52 of the squeezable container 50 of FIG. 5A passing through the slot 114 of the stirrer 100 of FIG. 4. For example, after using the initial position of either FIG. 5A or 5B, the position of 5C will be the next position. The stirrer 100 is ready to be slid along the container 50 to extract the contents of the container.

Thus, stirrers according to the disclosure may be used to extract the contents of a container, and then to mix the contents of the container. Stirrers may be provided with further features, for example, to facilitate gripping or holding of the stirrers.

FIG. 6 is a front view of a stirrer 200 including a body 212 defining a slot 214 and a rounded tab 225. The stirrer 200, the body 212, and the slot 214 are substantially the same as or similar in form, construction, use, and composition, to the stirrer 10, the body 12, and the slot 14 described with reference to FIGS. 1A to 3. The slot 214 may further be provided with at least one teardrop-shaped end, as described with reference to FIGS. 4 to 5C.

The tab 225 may have any suitable shape and form to facilitate gripping or holding of the stirrer 200, for example, during engagement with a container, during mixing, during removal of a mixture from a container after mixing, or during guiding the mixture into a mold. The body 212 may define the tab 225. For example, the tab 225 may be unitary or integral with the body 212, and may extend continuously from the body 212. In other embodiments, the tab 225 may be temporarily or permanently secured to the body 212. The tab 225 may have any suitable length, for example, a length that facilitates holding or gripping of the tab 225, and ultimately, manipulating, orienting, and directing the stirrer 200. In embodiments, the tab 225 may have a length from about 20mm to about 30mm.

The tab 225 may extend in a direction perpendicular to the slot 214. However, the tab may also extend in a direction that deviates from the normal, for example, being angled by at least 5°, or at least 10°, or at least 20°, or at least 30°, relative to the direction along which slot 214 extends.

The tab 225 may defines rounded tab ends 227. The rounded tab ends 227 may facilitate ergonomically holding the stirrer 212.

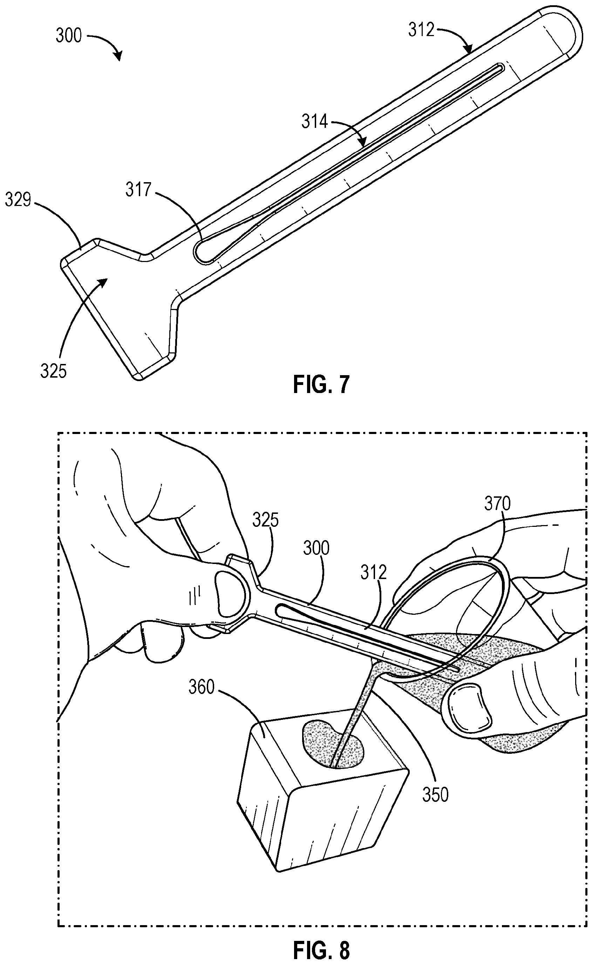

FIG. 7 is a front view of a stirrer 300 including a body 312 defining a slot 314 and an angled tab 325. The stirrer 300, the body 312, and the slot 314 are substantially the same as or similar in form, construction, use, and composition, to the stirrer 10, the body 12, and the slot 14 described with reference to FIGS. 1A to 3. The slot 314 includes a teardrop-shaped end 317, similar to that described with reference to FIGS. 4 to 5C. The teardrop-shaped end 317 is position facing or adjacent the tab 325. Positioning the teardrop-shaped end 317 facing or adjacent the tab 325 may resist flexing or bending and may facilitate better orienting and controlling the teardrop-shaped end 317 relative to a container. The tab 325 is similar to the tab 225 described with reference to FIG 6, but different in the shape of the periphery. For example, at least two edges of the tab 325 form an angle.

In some embodiments, the tab 325 defines a substantially polygonal edge 329. The polygonal edge 329 may include rounded corners or vertices. In some such embodiments, the tab 325 defines a substantially pentagonal edge, for example, as shown in FIG. 7. The polygonal edge 329 may facilitate gripping the tab 325 in the hand, or between fingers and/or the thumb. The angled tab 325, for example, with a polygonal edge, may resist flexing or bending, for example, compared to a tab that only extends perpendicularly or transversely to the slot 314.

Thus, the stirrer 300 may be useful for stirring a curable composition extracted from a squeezable container.

FIG. 8 is a conceptual view of pouring of a curable composition 350 being guided by the body 312 of the stirrer 300 of FIG. 7 into a mold 360, and being held by the user at the angled tab 325. The body 312 guides the curable composition 350, for example, substantially along a surface of the body 312, toward the mold 360. The composition 350 may be held in a mixing container 370. For example, the composition 350 may have been formed by extracting separate Part A and Part B compositions from respective pouches by the stirrer 300, and mixed by the stirrer 300 in the mixing container 370. Curing may have been initiated by mixing the Part A and Part B compositions into curable composition 350. In other embodiments, the composition 350 may be formed by mixing an additive into a single-part (for example, UV-curable or thermally curable) composition using the stirrer 300. Instead of the stirrer 300, any suitable stirrer according the present disclosure may be used in a similar manner.

Thus, the composition 350 may be directed substantially into the mold 360, reducing or avoiding spillage of the composition 350 outside the mold 360. The composition 350 would eventually cure and set inside the mold 360 to form an article provided a shape and form by the mold 360.

The body and the slot of stirrers may be provided with further features or geometries to facilitate engagement with the container, and use.

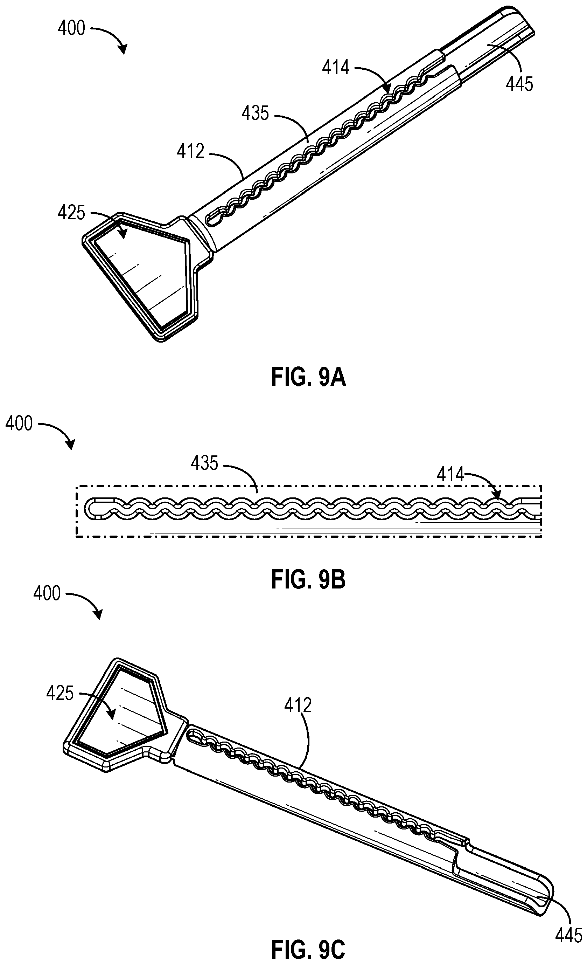

FIG. 9A is a first perspective view of a stirrer 400 including a body 412 defining a tab 425 and a tubular section 435, the tubular section 435 defining a zigzag slot 414. FIG. 9B is a partial front view of the zigzag slot 414 of FIG. 9A. FIG. 9C is a second perspective view of the stirrer 400 of FIG. 9A. The stirrer 400, the body 412, and the slot 414 are substantially the same as or similar in form, construction, use, and composition, to the stirrer 10, the body 12, and the slot 14 described with reference to FIGS. 1A to 3. The slot 414 differs in the geometry. In particular, the slot 414 extends along a zigzag line (or having a serrated shape), as seen in FIG. 9B.

The body 412 defines the tubular section 435 extending from the tab 425, and the tubular section 435 defines the slot 414 through a wall of the tubular section 435. The tab 425 may be an angled tab, or may be substituted with a rounded tab, or some other tab. In some embodiments, no tab is present in the stirrer 400.

In some embodiments, the slot 414 is a first slot, the wall of the tubular section 435 is a first wall, and the tubular section defines a second slot in a second wall of the tubular section opposing the first wall. For example, diametrically opposing surfaces of a cylindrical or tubular section may be considered to constitute opposing first and second walls. In some such embodiments, the first slot and the second slot may be substantially parallel and opposed.

In some embodiments, the body 412 defines a scoop 445 extending from the tubular section 435. The scoop may be at an end of the body 412 opposing the tab 425. The scoop 445 may facilitate mixing, or may facilitate removal of a mixture after mixing from a mixing container. The scoop 445 may be used to direct mixed material into a mold, or to remove debris or contaminants from the mixing container or the mold.

In embodiments, a kit may include at least one squeezable container including a curable composition. The squeezable container may be any container according to the present disclosure, for example, a container described with reference to any of FIGS. 2, 3, or 5A to 5C. The kit further includes a stirrer for stirring the curable composition extracted from the squeezable container. The stirrer may include any stirrer according to the present disclosure, for example, a stirrer describes with reference to any of FIGS. 1A to 9C. The stirrer includes a body extending in a direction along a stirrer axis. A slot defined in the body may extend in the direction along the stirrer axis. The slot may be configured to retain or squeeze at least a portion of the squeezable container.

The kit may include a housing including the container and the stirrer. The housing may be formed of any suitable material, and may include a soft portion, a rigid portion, or combinations thereof. The housing may be in the form of a bag, a pouch, a box, a clam-shell, or have any other suitable shape or form. The housing may be transparent, translucent, or opaque, in one or more portions or as a whole.

One or more illustrative embodiments of the disclosure have been described above. The above-described embodiments are merely illustrative of the scope of this disclosure and are not intended to be limiting in any way. Accordingly, variations, modifications, and equivalents of the embodiments disclosed herein are also within the scope of this disclosure.

While the present disclosure has been described with reference to a number of embodiments, it will be understood by those skilled in the art that the invention is not limited to such disclosed embodiments. Rather, the invention can be modified to incorporate any number of variations, alterations, substitutions, or equivalent arrangements not described herein, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A stirrer for stirring a curable composition extracted from a squeezable container, the stirrer comprising:
a body extending in a direction along a stirrer axis; and
a slot defined in the body and extending in the direction along the stirrer axis, wherein a total length of the slot is less than 80% of a total length of the body, wherein the slot is configured to retain or squeeze at least a portion of the squeezable container.

2. The stirrer of claim 1, wherein at least a portion of the body surrounding the slot is substantially rigid.

3. The stirrer of claim 1, wherein the body is formed as a unitary continuous unit.

4. The stirrer of claim 1, wherein the total length of the slot is less than 50% of the total length of the body.

5. The stirrer of claim 1, wherein the slot defines a maximum slot width, wherein the body defines a maximum body thickness, and wherein the maximum slot width is in a ratio of 5:1 to 1:5 relative to the maximum body thickness.

6. The stirrer of claim 1, wherein the body defines a maximum body width, and wherein the maximum slot width is less than 20% of the maximum body width.

7. The stirrer of claim 1, wherein the body extends between a first rounded body end and a second rounded body end.

8. The stirrer of claim 1, wherein the body defines a rounded body edge across a thickness of the body.

9. The stirrer of claim 1, wherein the slot extends between a first rounded slot end and a second rounded slot end, and optionally wherein the slot has a rounded slot edge across a thickness of the body.

10. The stirrer of claim 1, wherein the slot terminates at a teardrop-shaped slot end, wherein the teardrop-shaped slot end facilitates introduction of a portion of the squeezable container into or through the slot.

11. The stirrer of claim 1, wherein a center of the slot is offset from a center of the body.

12. The stirrer of claim 1, wherein the body defines a tab for holding the stirrer, optionally wherein the tab extends in a direction perpendicular to the slot, and optionally wherein the tab defines a substantially polygonal edge or a substantially pentagonal edge.

13. The stirrer of claim 1, wherein the body defines a tubular section extending from the tab, and wherein the tubular section defines the slot through a wall of the tubular section, and optionally wherein the slot is a first slot, wherein the wall is a first wall, and wherein the tubular section defines a second slot in a second wall of the tubular section opposing the first wall, and optionally wherein the body defines a scoop extending from the tubular section.

14. The stirrer of claim 1, wherein the slot extends along a straight line or a zigzag line.

15. A kit comprising:
at least one squeezable container comprising a curable composition; and
a stirrer for stirring the curable composition extracted from the squeezable container, the stirrer comprising:
a body extending in a direction along a stirrer axis and defining a tubular section;
a slot defined in the tubular section of the body and extending in the direction along the stirrer axis;
a scoop extending from the tubular section; and
a tab extending from the body and opposing the scoop,
wherein the tab has a substantially polygonal contour,
wherein the slot extends along a zigzag line,
wherein the slot is configured to retain at least a portion of the squeezable container, and
wherein the tab is configured to be held during engagement of the squeezable container with the slot to extract the curable composition and during stirring of the curable composition.
